(19) Europäisches Patentamt
European Patent Office
Office européen des brevets

(11) **EP 4 086 772 A1**

(12) **EUROPÄISCHE PATENTANMELDUNG**

(43) Veröffentlichungstag:
09.11.2022   Patentblatt 2022/45

(21) Anmeldenummer: 21172555.1

(22) Anmeldetag: 06.05.2021

(51) Internationale Patentklassifikation (IPC):
*G06F 11/36* (2006.01)    *G06F 11/34* (2006.01)
*G06F 11/00* (2006.01)

(52) Gemeinsame Patentklassifikation (CPC):
**G06F 11/3419; G06F 11/008; G06F 11/3447;
G06F 11/3452; G06F 11/3604**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Zwanzger, Johannes**
**85579 Neubiberg (DE)**

(54) **TESTEN DER FUNKTIONSFÄHIGKEIT EINES COMPUTERPROGRAMMS**

(57)    Die Erfindung betrifft ein computerimplementiertes Verfahren zum Testen der Funktionsfähigkeit eines Computerprogramms (5), wobei das Computerprogramm (5) eine Struktur aufweisend eine Mehrzahl an Entscheidungsknoten (2, 4) aufweist, mit den Schritten:
- Generieren (S1) von mindestens einem Eingabewert (3) für eine Teilmenge (21, 22, 23, 211, 212, 222, 231, 231, 2111, 2112, 2211, 2212, 2311, 2312) der Mehrzahl an Entscheidungsknoten (2, 4),
wobei das Generieren des mindestens einen Eingabewerts (3) unter Verwendung eines Algorithmus durchgeführt wird,
wobei der Algorithmus dahingehend ausgebildet ist, den mindestens einen Eingabewert (3) und die Teilmenge der Mehrzahl an Entscheidungsknoten (2, 4) unter Einbezug:
- einer Wahrscheinlichkeit einer mangelnden Funktionsfähigkeit des Computerprogrammes (5) für den mindestens einen Eingabewert (3) an der Teilmenge an Entscheidungsknoten (21, 22, 23, 211, 212, 222, 231, 231, 2111, 2112, 2211, 2212, 2311, 2312 oder an einem der Teilmenge an Entscheidungsknoten folgenden Entscheidungsknoten n, und
- einer bisher jeweils verwendeten Rechenzeit und/oder Besuchsanzahl an der Mehrzahl an Entscheidungsknoten (2, 4)
festzulegen.

FIG 2

**Beschreibung**

Gebiet der Erfindung

Die vorliegende Erfindung betrifft ein Verfahren zum Testen der Funktionsfähigkeit eines Computerprogramms, ein Verfahren zum Konfigurieren und/oder Steuern eines industriellen Prozesses und ein zugehöriges Computerprogrammprodukt.

Beschreibung des Stands der Technik

Unter Fuzzing versteht man die Konfrontation eines Computerprogrammes, insbesondere einer computerimplementierten Anwendung, mit einer Vielzahl verschiedenartiger Eingabewerte, insbesondere Inputs, mit dem Ziel, Fehler in der Implementierung des Computerprogrammes aufzudecken.

Dabei geht es insbesondere um das Auffinden von Eingabewerten, bei denen es zu einem ungeplanten Beenden, insbesondere Abstürzen, insbesondere durch Buffer-Overflows, kommt, weil diese häufig als Basis zum Ausnutzen von Sicherheitslücken, insbesondere von Security-Exploits, dienen können. Fuzzing wird somit einerseits von Angreifern, insbesondere von Hackern, genutzt, um Einbruchsstellen in Systeme, auf welchen ein Computerprogramm läuft, zu finden.

Andererseits wird Fuzzing auch während der Entwicklungs- und Testphase einer Implementierung eines Computerprogrammes angewandt, um die Anzahl von Fehlern und die potenzielle Angriffsfläche vor Auslieferung bestmöglich zu reduzieren.

Ein Fuzzer ist hierbei ein Tool, welches automatisch Eingabewerte, insbesondere Input, generiert und an das Computerprogramm zur Auswertung schickt.

Als eine erste Möglichkeit der Realisierung durchläuft der Fuzzer den möglichen Inputraum dabei einfach zufällig. Ein solches Fuzzing ist jedoch nicht in der Regel nicht sehr effektiv, weil vielen der Verzweigungen in der Implementierung nur gefolgt wird, wenn der Input eine ganz spezielle Ausprägung aufweist, die bei zufälligem Sampling nur mit geringer Wahrscheinlichkeit gefunden werden kann.

Als eine zweite Möglichkeit der Realisierung und um die Code Coverage, also den Anteil des implementierten Codes, der anhand der generierten Inputs mindestens einmal durchlaufen wird, zu erhöhen, ist also ein systematischeres Vorgehen notwendig. Dies führt aber zu dem Problem, dass aufgrund einer möglichen Vielzahl an Verzweigungen auf wiederum mehreren Ebenen, eine Vielzahl an Inputmöglichkeiten existiert, welche mit den aktuell vorhandenen Rechenleistungen nicht annähernd abgedeckt werden können.

Zur Verbesserung der Leistungen eines Fuzzers gibt es in dieser Hinsicht verschiedene Ansätze.

Die Aufgabe der Erfindung besteht darin, eine verbesserte Lösung zum Testen der Funktionsfähigkeit von Computerprogrammen bereitzustellen.

ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein computerimplementiertes Verfahren zum Testen der Funktionsfähigkeit eines Computerprogramms, wobei das Computerprogramm eine Struktur aufweisend eine Mehrzahl an Entscheidungsknoten aufweist.

Das Verfahren beinhaltet die Schritte:

- Generieren von mindestens einem Eingabewert für eine Teilmenge der Mehrzahl an Entscheidungsknoten,
- Senden des mindestens einen Eingabewerts an die Teilmenge der Mehrzahl der Entscheidungsknoten,
- Empfangen von mindestens einer Laufzeitinformation, wobei die mindestens eine Laufzeitinformation durch Berechnungen an dem mindestens einen Eingabewert von dem Computerprogramm berechnet und insbesondere dem dem erfindungsgemäßen Verfahren zugrunde liegenden Algorithmus zugänglich gemacht wird und
- Ausgabe einer Ausgabemeldung zur Funktionsfähigkeit des Computerprogramms, wobei die Funktionsfähigkeit in Abhängigkeit der mindestens einen Laufzeitinformation bestimmt wird.

Das Generieren des mindestens einen Eingabewerts im Rahmen des erfindungsgemäßen Verfahrens wird unter Verwendung eines Algorithmus durchgeführt, wobei der Algorithmus dahingehend ausgebildet ist, den mindestens einen Eingabewert und die Teilmenge der Mehrzahl an Entscheidungsknoten unter Einbezug:

- einer Wahrscheinlichkeit einer mangelnden Funktionsfähigkeit des Computerprogrammes für den mindestens einen Eingabewert an der Teilmenge an Entscheidungsknoten, entweder unmittelbar an den Entscheidungsknoten oder in einem Pfad unterhalb derselben, tiefer in der Struktur, also an einem der Teilmenge an Entscheidungsknoten folgenden Entscheidungsknoten und
- einer bisher jeweils verwendeten Rechenzeit und/oder Besuchsanzahl an der Mehrzahl an Entscheidungsknoten festzulegen.

Die Struktur des Computerprogramms ist als Baumstruktur bezeichenbar. An jedem Entscheidungsknoten zweigt mindestens eine Entscheidung ab, welche wiederum in Entscheidungsknoten münden können. Der Weg von einem Entscheidungsknoten zu einem anderen kann als "Pfad" bezeichnet werden.

Der mindestens einem Eingabewert kann in Form einer Variablen, insbesondere als nummerischer Wert, als Boolean Wert, oder in Form von Ziffern ausgeprägt sein. Auch umfasst der Eingabewert Belegungscharakteristika, wie insbesondere eine Länge des mindestens einen Eingabewerts.

Die mindestens eine Laufzeitinformation des Computerprogramms ist als Ausgabewert, Laufzeitdaten, Laufzeitwert, Programmzustand oder Speicherzustand des Computerprogramms bezeichenbar. Es handelt sich um Daten, die zur Laufzeit des Computerprogramms durch dieses als Antwort auf einen Eingabewert, auch als Input bezeichenbar, berechnet und insbesondere dem dem erfindungsgemäßen Verfahren zugrunde liegenden Algorithmus zugänglich gemacht werden.

Die bisher jeweils verwendete Rechenzeit und/oder Besuchsanzahl an der Mehrzahl an Entscheidungsknoten korreliert mit einer Anzahl an Versuchen an der Mehrzahl an einzelnen Entscheidungsknoten. Die Besuchsanzahl gibt konkret die Anzahl an bisherigen Besuchen an einem Entscheidungsknoten an.

Die Wahrscheinlichkeit einer mangelnden Funktionsfähigkeit des Computerprogrammes und die bisher jeweils verwendeten Rechenzeit und/oder Besuchsanzahl kann dabei so bestimmt werden, dass eine Summe aus der Wahrscheinlichkeit einer mangelnden Funktionsfähigkeit des Computerprogrammes und einem Kehrwert der bisher jeweils verwendeten Rechenzeit und/oder Besuchsanzahl maximiert wird. Die beiden Faktoren werden somit gegeneinander gewichtet. Dies hat den Effekt, dass an Entscheidungsknoten, an denen eine hohe Wahrscheinlichkeit einer mangelnden Funktionsfähigkeit des Computerprogrammes vorliegt, nur so lange untersucht wird, wie dies in einer angemessenen Relation zu bisher jeweils verwendeten Rechenzeit und/oder Besuchsanzahl an den Entscheidungsknoten steht.

Falls der mindestens eine Eingabewert mehr als eine Instanz, d.h. mehr als eine Ausprägung, insbesondere eine Vielzahl an Eingabewerten, aufweist und außerdem nicht ein erster des mindestens einen Eingabewerts mit dem erfindungsgemäßem Verfahren getestet wird, ist die bisher jeweils verwendete Rechenzeit und/oder Besuchsanzahl ein Ergebnis, das größer Null ist und in diesem Fall einbezogen wird, um weitere Instanzen des mindestens einen Eingabewertes festzulegen und so das Generieren des mindestens einen Eingabewerts für die Teilmenge der Mehrzahl an Entscheidungsknoten beeinflusst bzw. in diese Generierung einfließt.

Ein Aspekt der Erfindung besteht darin, den Stand der Technik zum Testen der Funktionsfähigkeit eines Computerprogramms, insbesondere im Bereich des Fuzzings, zu verbessern.

Existierende Ansätze sind oft darauf spezialisiert, systematisch Eingabewerte, insbesondere Inputs, zu generieren, die bestimmten Strukturen, insbesondere Grammatiken, folgen und/oder diese verletzen, insbesondere nach Bitflips. Weniger ausgefeilt erscheinen dagegen Ansätze für das Treffen grundlegender Richtungsentscheidungen im Fuzzing-Prozess, wie insbesondere der Frage, ob es sich noch lohnt, die Suche in dem eingeschlagenen Pfad der Struktur des Computerprogramms nochmals zu vertiefen oder ob es aussichtsreicher ist, etwas grundlegend anderes zu probieren.

Der Nutzen des erfindungsgemäßen Verfahrens liegt darin, dass es für eine Erforschung der Struktur des Computerprogramms, insbesondere eines Suchbaums, eine auf dem Algorithmus basierte, mathematisch fundierte Entscheidungsgrundlage liefert, welcher Entscheidungsknoten und welcher Eingabewert als nächstes untersucht werden soll. Dies geschieht durch eine Abwägung der vermuteten Erfolgsaussicht an einem Entscheidungsknoten und der Rechenzeit und/oder Besuchsanzahl, die bereits in die Untersuchung der Mehrzahl an Entscheidungsknoten investiert wurde. Hierdurch wird sichergestellt, dass wichtigen Entscheidungsknoten verstärkt Augenmerk geschenkt wird, auch als Exploitation bezeichenbar, ohne dabei den Blick auf Alternativen zu verstellen, auch als Exploration bezeichenbar.

Allgemein kann die Entscheidungsfindung des erfindungsgemäßen Verfahrens, insbesondere eines erfindungsgemäßen Fuzzers, für den nächsten Entscheidungsknoten und den nächsten Eingabewert als die Anwendung eines Regelwerks, insbesondere einer sogenannten Policy, auf eine, experimentell durch die bisherigen Eingabewerte und das zugehörige Feedback oder die zugehörigen Ausgabewerte oder Laufzeitinformation des Computerprogramms, ermittelte Einschätzung der "Ausführungseigenschaften", insbesondere den Erwartungswert eines Fehlers, des untersuchten Binaries betrachtet werden.

Ein typisches Problem systematisch agierender Policies ist allerdings, dass sie durch zu wenig Streuung, insbesondere Verwendung von Zufall, in ihrem Vorgehen nur einen sehr engen Bereich des möglichen Inputraumes, der Menge an Eingabewerten, ausloten, insbesondere aus Zeitgründen, und oft zu lange in einem vermeintlich aussichtsreichen Pfad verweilen. Wie auch beim anderen Extrem einer komplett zufällig ausgerichteten Policy besteht damit die Gefahr, dass sich der Fuzzer "festläuft": Favorisiert die Policy etwa an einer bedingten Verzweigungsstelle im Programmfluss deutlich die Eingabe langer, stark strukturierter Strings, während für einen Fortschritt tatsächlich ein kurzer, zufälliger String benötigt würde, kann dies den Fortschritt im Fuzzing-Prozess zum Erliegen bringen. Gleiches gilt, wenn es in einem Entscheidungsknoten im Programmablauf aus Fuzzing-Sicht nichts zu finden gibt, die Policy aufgrund eines bestimmten überbewerteten Merkmals das Fuzzing aber immer wieder genau dorthin lenkt. Dieses Problem wird mit der Erfindung angegangen.

Die Erfindung bietet den Vorteil, dass mit einem einfachen und allgemeinen Ansatz eine sinnvolle Verteilung der Rechenzeit und/oder Besuchsanzahl zum Testen der Funktionsfähigkeit eines Computerprogramms, insbesondere durch einen Fuzzer, erreicht wird, d.h. dass unterschiedliche Entscheidungsknoten, insbesondere unterschiedliche Pfade der Programmausführung, angesteuert werden. Der Ansatz berücksichtigt die zum jeweiligen Entscheidungszeitpunkt vorliegenden Ausgabewerte oder Laufzeitinformationen und die Rechenzeit, insbesondere die Zahl der bereits erfolgten Besuche eines Pfades, mit einem mathematisch fundierten Gewichtungsverfahren. Damit wird ein guter Kompromiss zwischen "zufälligem Probieren" und "zielgerichtetem Erforschen aussichtsreicher Teilmengen des Inputsraumes" erzielt.

In einer Weiterbildung der Erfindung weist das Verfahren den weiteren Verfahrensschritt auf:

- Generieren von mindestens einem weiteren Eingabewert basierend auf der mindestens einen Laufzeitinformation für eine weitere Teilmenge der Mehrzahl an Entscheidungsknoten.

Basierend auf der mindestens einen Laufzeitinformation wird somit mindestens ein weiterer Eingabewert für eine weitere Teilmenge der Mehrzahl an Entscheidungsknoten generiert. Dies beschreibt nochmal explizit, dass die Schritte des Generierens von mindestens einem Eingabewert für eine Teilmenge der Mehrzahl an Entscheidungsknoten und des Empfangens von mindestens einer Laufzeitinformation nicht zwingend nacheinander, sondern ineinander verzahnt erfolgen können. Dies bedeutet, dass ein zweiter des mindestens einen Eingabewerts nach einer Berechnung eines ersten der mindestens einen Laufzeitinformation erfolgen kann, wobei der zweite des mindestens einen Eingabewerts einem ersten des mindestens einen Eingabewerts folgt und wobei der erste der mindestens einen Laufzeitinformation Ergebnis des Computerprogramms durch Verarbeiten des ersten des mindestens einen Eingabewerts ist. Die bisher jeweils verwendete Rechenzeit und/oder Besuchsanzahl wird auch hier einbezogen, um weitere Instanzen des mindestens einen weiteren Eingabewerts festzulegen.

In einer weiteren Weiterbildung der Erfindung wird die mindestens eine Laufzeitinformation vor dem Generieren des mindestens einen weiteren Eingabewerts vorverarbeitet. Ein Vorbearbeiten kann ein Filtern der mindestens einen Laufzeitinformation beinhalten.

In einer weiteren Weiterbildung der Erfindung werden Wiederholungen des Verfahrens mit dem mindestens einen weiteren Eingabewert als der mindestens eine Eingabewert durchgeführt, wobei in die bisher jeweils verwendete Rechenzeit und/oder Besuchsanzahl der Wiederholungen des Verfahrens eine in vorangegangenen Wiederholungen des Verfahrens verwendete Rechenzeit und/oder Besuchsanzahl einfließt.

Dies beschreibt nochmals explizit, dass die Menge an generierten Eingabewerte unbeschränkt ist und dass die Schritte des Generierens von mindestens einem Eingabewert für eine Teilmenge der Mehrzahl an Entscheidungsknoten und des Empfangens von mindestens einer Laufzeitinformation nicht zwingend nacheinander, sondern ineinander verzahnt erfolgen können. Anders ausgedrückt werden Wiederholungen des Verfahrens mit dem mindestens einem weiteren Eingabewert als der mindestens eine Eingabewert durchgeführt, wobei der mindestens eine Eingabewert auf dem mindestens einer Laufzeitinformation einer vorangegangenen Wiederholung basiert.

Außerdem wird das Verfahren beliebig oft von vorne wiederholt. Es findet somit ein wiederholtes Testen der Funktionsfähigkeit des Computerprogramms statt. Das Testen der Funktionsfähigkeit kann ab einem Neustart des Computerprogramms, dies entspricht in der Struktur des Computerprogramms insbesondere der Wurzel des Baumdiagramms, erfolgen. In das wiederholte Testen der Funktionsfähigkeit des Computerprogramms wird Wissen, insbesondere die mindestens eine Laufzeitinformation und die bisher jeweils verwendete Rechenzeit und/oder Besuchsanzahl, aus voran gegangenen Wiederholungen einbezogen.

In einer weiteren Weiterbildung der Erfindung wird, falls die mindestens eine Laufzeitinformation:

- einer Fehlermeldung,
- einem Einfrieren des Computerprogramms und/oder
- einem ungeplanten Beenden des Computerprogramms entspricht, der mindestens eine Eingabewert und die Teilmenge der Mehrzahl an Entscheidungsknoten gespeichert.

Dies hat den Vorteil, dass für den gespeicherten Eingabewert mit dem zugehörigen Entscheidungsknoten eine Modifikation des Computerprogramms durchgeführt werden kann, was insbesondere zu einer Behebung eines Fehlers führen kann.

In einer weiteren Weiterbildung der Erfindung umfasst die mangelnde Funktionsfähigkeit des Computerprogrammes:

- eine Fehlermeldung und/oder
- ein Einfrieren des Computerprogramms und/oder
- ein ungeplantes Beenden des Computerprogramms.

Mangelnde Funktionsfähigkeiten des Computerprogrammes können durch das erfindungsgemäße Verfahren aufgedeckt werden und für ein Erstellen eines geänderten Computerprogramms herangezogen werden.

In einer weiteren Weiterbildung der Erfindung ist die Mehrzahl an Entscheidungsknoten der Struktur in Entscheidungsebenen gegliedert. Die Entscheidungsebenen können auch als Hierarchie bezeichnet werden. Die Entscheidungsebenen können auch nur für einen Teil der Struktur vorliegen. Ein anderer Teil der Struktur kann eine andere Gliederung, insbesondere eine Vernetzung, aufweisen.

In einer weiteren Weiterbildung der Erfindung stellen die Mehrzahl der Entscheidungsknoten jeweils Verzweigungen für Entscheidungen dar und münden jeweils in Pfade. Die Pfade können wiederum in Entscheidungsknoten münden.

In einer weiteren Weiterbildung der Erfindung ist das computerimplementierte Verfahren zum Testen der Funktionsfähigkeit eines Computerprogramms als ein Fuzzing-Prozess ausgebildet. Das hat den Vorteil, dass Fuzzing-Prozesse durch das erfindungsgemäße Verfahren verbessert werden können.

In einer weiteren Weiterbildung der Erfindung ist der Algorithmus als Upper Confidence Bound (UCB) Algorithmus oder Predictor Upper Confidence Bound (PUCB) Algorithmus ausgebildet.

Nach dem Upper Confidence Bound Algorithmus ist eine zu einer gegebenen Zeit t gewählte Aktion $A_t$ definiert durch:

$$A_t = \underset{a}{\arg\max} \left[ Q_t(a) + c \sqrt{\frac{\log t}{N_t(a)}} \right]$$

mit:

- $Q_t(a)$ als der erwartete Wert einer Aktion a zum Zeitpunkt t,
- $N_t(a)$ die Anzahl, wie oft Aktion a zuvor, d.h. vor t, gewählt wurde und
- c eine Konfidenzwert, welcher das Level der Exploration kontrolliert.

Im Rahmen der Erfindung entspricht die Aktion $A_t$ dem Generieren eines bestimmten Eingabewerts a oder einer bestimmten Belegungsstrategie a für eine bestimmte Teilmenge an Entscheidungsknoten. Belegungsstrategien a können insbesondere eine Eingabelänge, insbesondere der Länge eines einzugebenden Passworts, betreffen oder eine Wahl zwischen einer "zufälligen" oder einer "systematischen" Belegung betreffen. $Q_t(a)$ entspricht einem Schätzwert für die Wahrscheinlichkeit einer mangelnden Funktionsfähigkeit des Computerprogrammes für den mindestens einen Eingabewert a oder die Belegungsstrategie a an der Teilmenge an Entscheidungsknoten, die entweder unmittelbar an den Entscheidungsknoten oder in einem Pfad unterhalb derselben auftreten kann; $Q_t(a)$ wird dabei regelmäßig auf Basis der vom Programm berechneten Ausgabewerte oder Laufzeitinformation aktualisiert. $N_t(a)$ entspricht der bisher verwendeten Rechenzeit und/oder Besuchsanzahl in den Pfaden, die bei Eingabe des bestimmten Eingabewertes a bzw. der Verwendung der Belegungsstrategie a an der Teilmenge der Entscheidungsknoten erreicht wurden oder der Anzahl, wie oft der bestimmte Eingabewert a an der Teilmenge der Entscheidungsknoten bislang eingegeben wurde.

Upper Confidence Bound (UCB) Algorithmus ist ein Online-Optimierungs-Verfahren, der sich aus einer einfachen Fragestellung motiviert: Man stelle sich vor, man habe mehrere Spielautomaten mit unterschiedlichen, aber zunächst unbekannten Gewinnwahrscheinlichkeiten vor sich. Nun soll eine gewisse Gesamtanzahl an Spielen absolviert werden, wobei man zu jeder Zeit freie Wahl hat, an welchem Automaten gespielt wird. Ziel ist die Maximierung des Erwartungswertes über die vorgenommenen Spiele am Ende der Spielzeit. Dieses Problem kann mit UCB gelöst werden, weil hierdurch ein sinnvoller Mittelweg zwischen reiner Exploration (Spielen an verschiedenen Automaten, um mehr über ihre Gewinnwahrscheinlichkeiten herauszufinden) und reiner Exploitation (gezieltes Spielen an einem Automaten, bei dem man eine hohe Gewinnwahrscheinlichkeit vermutet) gewählt wird. Die Variante PUCB verfeinert dieses Verfahren, indem schon eine gewisse Startschätzung über die Gewinnwahrscheinlichkeiten $Q_t(a)$ berücksichtigt wird. Hierfür erscheint es nach aktuellem Stand aussichtsreich, diese Startschätzungen durch ein neuronales Netzwerk vornehmen zu lassen.

Bei Verwendung von PUCB (statt UCB) kann der Prozess dadurch weiter verbessert werden, dass auf Basis eines Orakels, insbesondere eines entsprechend trainierten neuronalen Netzes, bereits mit guten Schätzwerten für die einzelnen Eingabewerte und Entscheidungsknoten gestartet wird. Dies verkürzt die Explorationsphase, also die experimentelle Ermittlung, welche Entscheidungsknoten oder Pfade der Struktur aussichtsreich erscheinen.

In einer weiteren Weiterbildung der Erfindung wird die Wahrscheinlichkeit einer mangelnden Funktionsfähigkeit des Computerprogrammes für den mindestens einen Eingabewert an der Teilmenge an Entscheidungsknoten jeweils durch eine heuristische Methode bestimmt.

Wird das erfindungsgemäße Verfahren und eine Bestimmung der Wahrscheinlichkeit einer mangelnden Funktionsfähigkeit des Computerprogrammes mit angepassten heuristischen Messkriterien für den "Fortschritt" eines Testens der Funktionsfähigkeit des Computerprogramms, insbesondere des Fuzzings, insbesondere durch Zählen der Anzahl verschiedener Codeabschnitte, die unterhalb einer Teilmenge von Entscheidungsknoten erreicht wurden, kombiniert, wobei die heuristischen Messkriterien letztlich in den erwarteten Wert einer Fuzzingentscheidung, also der Wahrscheinlichkeit einer mangelnden Funktionsfähigkeit des Computerprogrammes für den mindestens einen Eingabewert an der Teilmenge an Entscheidungsknoten, entweder unmittelbar an den Entscheidungsknoten oder in einem Pfad unterhalb derselben , eingehen, wird ein Fuzzer nach dem erfindungsgemäßen Verfahren seine Rechenzeit und/oder Besuchsanzahl automatisch in einem sinnvollen Verhältnis auf die verschiedenen Entscheidungsknoten der Struktur, auch als Pfade eines Baumes bezeichenbar, aufteilen.

Eine gute auf den Anwendungsfall angepasste Heuristik wendet Verfahren an, um die Erfolgsaussichten zukünftiger Eingabewerte, insbesondere Inputs, möglichst korrekt einzuschätzen. Ein Kriterium zur Erkennung, ob ein aktueller Knoten lohnt, tiefer untersucht zu werden, ist, insbesondere, ob eine Vielzahl weiterer Zweige von ihm abgehen. Ferner kann berücksichtig werden, inwiefern diese weiteren Zweige zu tatsächlich verschiedenen Abschnitten im Code der Anwendung korrespondieren und wie viele davon innerhalb der letzten n Schritte (wobei n eine statisch oder dynamisch festlegbare natürliche Zahl ist) des bisherigen Fuzzing-Prozesses zum ersten Mal besucht wurden; dies kann als Fortschrittsmessung interpretiert werden. Ein weiteres Kriterium zur Erkennung, ob es sich lohnt, eine bestimmte Richtung tiefer zu verfolgen, ist, ob sich eine Variablenbelegung für einen bestimmten Input ändert, diese Änderung für eine Vielzahl anderer Inputs aber nicht eingetreten ist. Insbesondere trifft dies auf Boolesche Variablen zu.

In einer weiteren Weiterbildung der Erfindung ist der Algorithmus dahingehend ausgebildet, den mindestens einen Eingabewert und die Mehrzahl an Entscheidungsknoten außerdem unter Einbezug eines Konfidenzintervalls festzulegen, wobei das Konfidenzintervall der Wahrscheinlichkeit einer mangelnden Funktionsfähigkeit des Computerprogrammes für den mindestens einen Eingabewert an der Teilmenge an Entscheidungsknoten, entweder unmittelbar an den Entscheidungsknoten oder in einem Pfad unterhalb derselben, also an einem der Teilmenge an Entscheidungsknoten folgenden Entscheidungsknoten, zugehörig ist. Dieser Vorteil wird insbesondere auch vom Upper Confidence Bound (UCB) Algorithmus genutzt.

In einer weiteren Weiterbildung der Erfindung wird das Generieren des mindestens einen Eingabewerts zusätzlich unter Verwendung eines neuronalen Netzes durchgeführt. Dieser Vorteil wird insbesondere auch vom Predictor Upper Confidence Bound (PUCB) Algorithmus genutzt.

Die Erfindung umfasst außerdem ein Verfahren zum Konfigurieren und/oder Steuern eines industriellen Prozesses, insbesondere eines Fertigungsprozesses, mit einem Computerprogramm. Das Verfahren zum Konfigurieren und/oder Steuern eines industriellen Prozesses umfasst die Schritte:

- Testen des Computerprogramms mit einem Verfahren zum Testen der Funktionsfähigkeit nach einem der vorhergehenden Ansprüche,
- Erstellen eines geänderten Computerprogramms durch ein Heranziehen der Ausgabemeldung zur Funktionsfähigkeit des Computerprogramms und
- Konfigurieren und/oder Steuern des industriellen Prozesses durch das geänderte Computerprogramm.

Das Verfahren zum Konfigurieren und/oder Steuern eines industriellen Prozesses hat den Vorteil, dass das erfindungsgemäße Verfahren zum Testen der Funktionsfähigkeit eines Computerprogramms und das durch das erfindungsgemäße Verfahren geänderte Computerprogramm zum Konfigurieren und/oder Steuern des industriellen Prozesses herangezogen wird und so Fehler im industriellen Prozess vermieden werden können.

Die Erfindung umfasst außerdem ein Computerprogrammprodukt, umfassend ein zweites Computerprogramm, wobei das zweite Computerprogramm in eine Speichereinrichtung einer Recheneinheit ladbar ist, wobei mit dem zweiten Computerprogramm die Schritte eines erfindungsgemäßen Verfahrens ausgeführt werden, wenn das zweite Computerprogramm auf der Recheneinheit ausgeführt wird.

KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen

Fig. 1　　ein Ablaufdiagramm des erfindungsgemäßen Verfahrens und

Fig. 2　　eine schematische Darstellung einer Struktur eines Computerprogramms aufweisend eine Mehrzahl an Entscheidungsknoten.

DETAILLIERTE BESCHREIBUNG DER ERFINDUNG

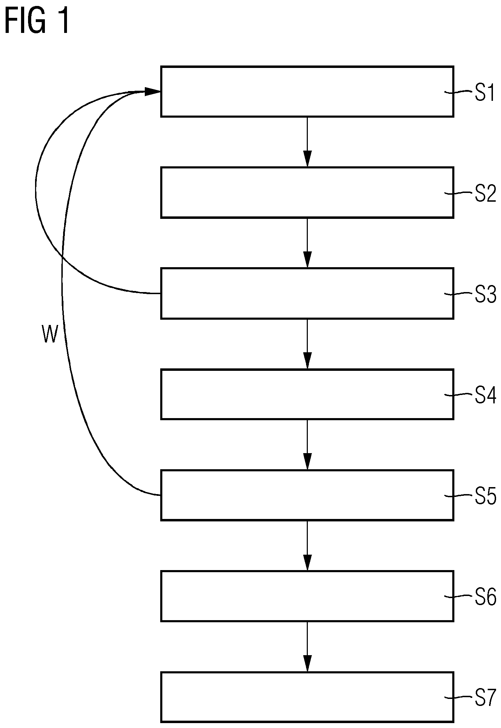

Fig. 1 zeigt ein Ablaufdiagramm des erfindungsgemäßen computerimplementierten Verfahrens zum Testen der Funktionsfähigkeit eines Computerprogramms, wobei das Computerprogramm eine Struktur aufweisend eine Mehrzahl an Entscheidungsknoten aufweist. Das Verfahren beinhaltet die Schritte:

- Schritt S1: Generieren von mindestens einem Eingabewert für eine Teilmenge der Mehrzahl an Entscheidungsknoten,
- Schritt S2: Senden des mindestens einen Eingabewerts an die Teilmenge der Mehrzahl der Entscheidungsknoten,
- Schritt S3: Empfangen von mindestens einer Laufzeitinformation, wobei die mindestens eine Laufzeitinformation durch Berechnungen an dem mindestens einen Eingabewert von dem Computerprogramm berechnet und insbesondere dem dem erfindungsgemäßen Verfahren zugrunde liegenden Algorithmus zugänglich gemacht wird und
- Schritt S4: Ausgabe einer Ausgabemeldung zur Funktionsfähigkeit des Computerprogramms, wobei die Funktionsfähigkeit in Abhängigkeit der mindestens eine Laufzeitinformation bestimmt wird.

Schritt S1, das Generieren des mindestens einen Eingabewerts, wird unter Verwendung eines Algorithmus durchgeführt, wobei der Algorithmus dahingehend ausgebildet ist, den mindestens einen Eingabewert und die Teilmenge der Mehrzahl an Entscheidungsknoten unter Einbezug:

- einer Wahrscheinlichkeit einer mangelnden Funktionsfähigkeit des Computerprogrammes für den mindestens einen Eingabewert an der Teilmenge an Entscheidungsknoten oder an einem der Teilmenge an Entscheidungsknoten folgenden Entscheidungsknoten und
- einer bisher jeweils verwendeten Rechenzeit und/oder Besuchsanzahl an der Mehrzahl an Entscheidungsknoten festzulegen.

Somit liegt eine Verzahnung der Schritte S1 und S3 vor. Die Schritte des Generierens von mindestens einem Eingabewert für eine Teilmenge der Mehrzahl an Entscheidungsknoten S1 und des Empfangens von der mindestens einem Laufzeitinformation S3 erfolgen nicht zwingend nacheinander, sondern ineinander verzahnt. Dies bedeutet, dass ein zweiter des mindestens einen Eingabewerts nach einer Ausgabe oder einem Berechnen eines ersten der mindestens einen Laufzeitinformation erfolgen kann, wobei der zweite des mindestens einen Eingabewerts einem ersten des mindestens einen Eingabewerts folgt und wobei der erste der mindestens einen Laufzeitinformation Ergebnis des Computerprogramms durch Verarbeiten des ersten des mindestens einen Eingabewerts ist. Die bisher jeweils verwendete Rechenzeit und/oder Besuchsanzahl wird auch hier einbezogen, um weitere Instanzen des mindestens einen weiteren Eingabewert festzulegen.

Das Verfahren beinhaltet optional den weiteren Verfahrensschritt:

- Schritt S5: Generieren von mindestens einem weiteren Eingabewert basierend auf der mindestens einen Laufzeitinformation für eine weitere Teilmenge der Mehrzahl an Entscheidungsknoten.

Optional wird die mindestens eine Laufzeitinformation vor Schritt S5, dem Generieren des mindestens einen weiteren Eingabewerts, vorverarbeitet.

Optional werden außerdem Wiederholungen W des Verfahrens, insbesondere der Schritte S1 bis S4 oder S5, mit dem mindestens einen weiteren Eingabewert als der mindestens eine Eingabewert durchgeführt, wobei in die bisher jeweils verwendete Rechenzeit und/oder Besuchsanzahl der Wiederholungen W des Verfahrens eine in vorangegangenen Wiederholungen des Verfahrens verwendete Rechenzeit einfließt.

Außerdem wird das Verfahren beliebig oft von vorne wiederholt. Es findet somit ein wiederholtes Testen der Funktionsfähigkeit des Computerprogramms statt. Das Testen der Funktionsfähigkeit kann ab einem Neustart des Computerprogramms, dies entspricht in der Struktur des Computerprogramms insbesondere der Wurzel des Baumdiagramms, erfolgen. In das wiederholte Testen der Funktionsfähigkeit des Computerprogramms wird Wissen, insbesondere die mindestens eine Laufzeitinformation und die bisher jeweils verwendete Rechenzeit und/oder Besuchsanzahl, aus voran gegangenen Wiederholungen einbezogen.

Zusätzlich betrifft die Erfindung ein Verfahren zum Konfigurieren und/oder Steuern eines industriellen Prozesses, insbesondere eines Fertigungsprozesses, mit einem Computerprogramm, mit den Schritten:

- Schritt S1-S4 oder S1-S5: Testen des Computerprogramms mit einem Verfahren zum Testen der Funktionsfähigkeit nach einem der vorhergehenden Ansprüche,
- Schritt S6: Erstellen eines geänderten Computerprogramms durch ein Heranziehen der Ausgabemeldung zur Funktionsfähigkeit des Computerprogramms und
- Schritt S7: Konfigurieren und/oder Steuern des industriellen Prozesses durch das geänderte Computerprogramm.

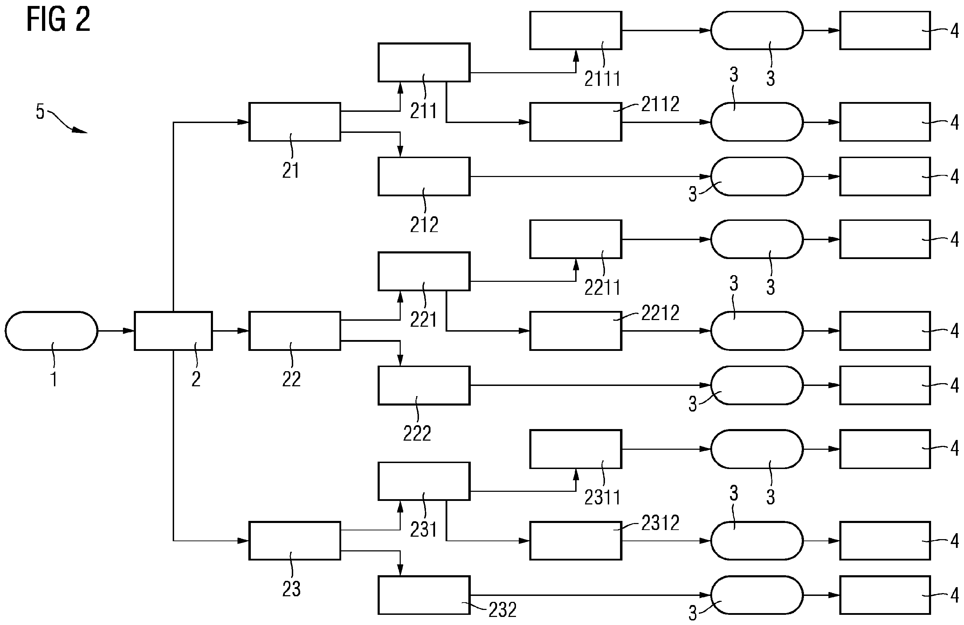

Fig. 2 zeigt eine schematische Darstellung einer Struktur eines Computerprogramms 5 aufweisend eine Mehrzahl an Entscheidungsknoten. Fig. 2 kann als Entscheidungsbaum mit Hierarchieebenen, Knoten und Pfaden betrachtet werden.

Fig. 2 zeigt eine erste Stelle 1 in einem Computerprogramm 5, welche eine erste Programmeingabe 1 erfordert. Es steht eine erste Entscheidung 2 an. Die erste Entscheidung 2 kann insbesondere eine Eingabelänge betreffen. Es kann insbesondere eine Eingabelänge mit drei, vier oder fünf Stellen gewählt werden. Anschließend steht, je nach gewählter ersten Entscheidung 2 eine zweite Entscheidung 21, 22, 23 an. Die zweite Entscheidung 21, 22, 23 kann eine Belegungsstrategie betreffen. Die Belegungsstrategie kann systematisch 211, 221, 231 oder zufällig 212, 222, 232 ausgebildet sein. Im Falle einer systematischen Belegungsstrategie 211, 221, 231 kann anschließend eine Systematik ausgewählt werden, insbesondere eine erste Systematik 2111, 2211, 2311 oder eine zweite Systematik 2112, 2212, 2312. Anschließend folgt, für jede Belegungsstrategie, systematisch 211, 221, 231 oder zufällig 212, 222, 232, eine Programmeingabe 3. Die Programmeingabe 3 entspricht einem Eingabewert oder einem Input. Das Computerprogramm 5 berechnet daraufhin mindestens eine Laufzeitinformation oder mindestens einen Ausgabewert, auch als Laufzeitdaten bezeichenbar, der dem dem erfindungsgemäßen Verfahren zugrunde liegenden Algorithmus zugänglich gemacht. Anschließend kann darauf basierend eine weitere Entscheidung 4 getroffen werden.

Anhand der Laufzeitinformation, Ausgabewerte oder Laufzeitdaten werden Gewichte zukünftiger Entscheidungen an allen Entscheidungsknoten, insbesondere die erste Entscheidung 2, die zweite Entscheidung 21, 22, 23, die Entscheidung für die Belegungsstrategie 211, 221, 231, 212, 222, 232 und die weitere Entscheidung 4, aktualisiert und es wird der nächste Eingabewert mit einem zugehörigem Entscheidungsknoten durch den Algorithmus bestimmt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

**Patentansprüche**

1. Computerimplementiertes Verfahren zum Testen der Funktionsfähigkeit eines Computerprogramms (5), wobei das Computerprogramm (5) eine Struktur aufweisend eine Mehrzahl an Entscheidungsknoten (2, 4) aufweist,
   mit den Schritten:

   - Generieren (S1) von mindestens einem Eingabewert (3) für eine Teilmenge (21, 22, 23, 211, 212, 222, 231, 231, 2111, 2112, 2211, 2212, 2311, 2312) der Mehrzahl an Entscheidungsknoten (2, 4),
   - Senden (S2) des mindestens einen Eingabewerts an die Teilmenge der Mehrzahl der Entscheidungsknoten (2, 4),
   - Empfangen (S3) von mindestens einer Laufzeitinformation, wobei die mindestens eine Laufzeitinformation durch Berechnungen an dem mindestens einen Eingabewert (3) von dem Computerprogramm (5) berechnet wird und
   - Ausgabe (S4) einer Ausgabemeldung zur Funktionsfähigkeit des Computerprogramms (5), wobei die Funktionsfähigkeit in Abhängigkeit der mindestens einen Laufzeitinformation bestimmt wird,

   wobei das Generieren des mindestens einen Eingabewerts (3) unter Verwendung eines Algorithmus durchgeführt wird,
   wobei der Algorithmus dahingehend ausgebildet ist, den mindestens einen Eingabewert (3) und die Teilmenge der Mehrzahl an Entscheidungsknoten (2, 4) unter Einbezug:

   - einer Wahrscheinlichkeit einer mangelnden Funktionsfähigkeit des Computerprogrammes (5) für den mindestens einen Eingabewert (3) an der Teilmenge an Entscheidungsknoten (21, 22, 23, 211, 212, 222, 231, 231, 2111, 2112, 2211, 2212, 2311, 2312) oder an einem der Teilmenge an Entscheidungsknoten folgenden Entscheidungsknoten und
   - einer bisher jeweils verwendeten Rechenzeit und/oder Besuchsanzahl an der Mehrzahl an Entscheidungsknoten (2, 4)

   festzulegen.

2. Verfahren nach Anspruch 1,
   mit den weiteren Verfahrensschritt:

   - Generieren (S5) von mindestens einem weiteren Eingabewert basierend auf der mindestens einen Laufzeitinformation für eine weitere Teilmenge der Mehrzahl an Entscheidungsknoten (2, 3).

3. Verfahren nach Anspruch 2,
   wobei die mindestens eine Laufzeitinformation vor dem Generieren (S5) des mindestens einen weiteren Eingabewerts vorverarbeitet wird.

4. Verfahren nach Anspruch 2 oder 3,
   wobei Wiederholungen (W) des Verfahrens (S1-S5) mit dem mindestens einen weiteren Eingabewert als der mindestens eine Eingabewert durchgeführt werden,
   wobei in die bisher jeweils verwendete Rechenzeit und/oder Besuchsanzahl der Wiederholungen (W) des Verfahrens eine in vorangegangenen Wiederholungen des Verfahrens verwendete Rechenzeit und/oder Besuchsanzahl einfließt.

5. Verfahren nach einem der vorhergehenden Ansprüche,
   wobei, falls die mindestens eine Laufzeitinformation:

   - einer Fehlermeldung,
   - einem Einfrieren des Computerprogramms und/oder
   - einem ungeplanten Beenden des Computerprogramms entspricht, der mindestens eine Eingabewert (3) und die Teilmenge der Mehrzahl an Entscheidungsknoten (2, 3) gespeichert wird.

6. Verfahren nach einem der vorhergehenden Ansprüche,
   wobei die mangelnde Funktionsfähigkeit des Computerprogrammes (5) :

   - eine Fehlermeldung und/oder
   - ein Einfrieren des Computerprogramms und/oder
   - ein ungeplantes Beenden des Computerprogramms umfasst.

**7.** Verfahren nach einem der vorhergehenden Ansprüche,
wobei die Mehrzahl an Entscheidungsknoten (2, 4) der Struktur in Entscheidungsebenen gegliedert ist.

**8.** Verfahren nach einem der vorhergehenden Ansprüche,
wobei die Mehrzahl der Entscheidungsknoten (2, 4) jeweils Verzweigungen für Entscheidungen darstellen und in Pfade münden.

**9.** Verfahren nach einem der vorhergehenden Ansprüche,
wobei das computerimplementierte Verfahren zum Testen der Funktionsfähigkeit eines Computerprogramms (5) als ein Fuzzing-Prozess ausgebildet ist.

**10.** Verfahren nach einem der vorhergehenden Ansprüche,
wobei der Algorithmus als:

- Upper Confidence Bound Algorithmus oder
- Predictor Upper Confidence Bound Algorithmus ausgebildet ist.

**11.** Verfahren nach einem der vorhergehenden Ansprüche,
wobei die Wahrscheinlichkeit einer mangelnden Funktionsfähigkeit des Computerprogrammes (5) für den mindestens einen Eingabewert (3) an der Teilmenge an Entscheidungsknoten jeweils durch eine heuristische Methode bestimmt wird.

**12.** Verfahren nach einem der vorhergehenden Ansprüche,
wobei der Algorithmus dahingehend ausgebildet ist, den mindestens einen Eingabewert und die Mehrzahl an Entscheidungsknoten (2, 4) außerdem unter Einbezug eines Konfidenzintervalls festzulegen, wobei das Konfidenzintervall der Wahrscheinlichkeit einer mangelnden Funktionsfähigkeit des Computerprogrammes für den mindestens einen Eingabewert (3) an der Teilmenge an Entscheidungsknoten oder an einem der Teilmenge an Entscheidungsknoten folgenden Entscheidungsknoten, zugehörig ist.

**13.** Verfahren nach einem der vorhergehenden Ansprüche,
wobei das Generieren (S1) des mindestens einen Eingabewerts (3) zusätzlich unter Verwendung eines neuronalen Netzes durchgeführt wird.

**14.** Verfahren zum Konfigurieren und/oder Steuern eines industriellen Prozesses, insbesondere eines Fertigungsprozesses, mit einem Computerprogramm (5),
mit den Schritten:

- Testen des Computerprogramms (5) mit einem Verfahren (S1-S4 oder S1-S5) zum Testen der Funktionsfähigkeit nach einem der vorhergehenden Ansprüche,
- Erstellen (S6) eines geänderten Computerprogramms durch ein Heranziehen der Ausgabemeldung zur Funktionsfähigkeit des Computerprogramms (5) und
- Konfigurieren (S7) und/oder Steuern des industriellen Prozesses durch das geänderte Computerprogramm.

**15.** Computerprogrammprodukt, umfassend ein zweites Computerprogramm, wobei das zweite Computerprogramm in eine Speichereinrichtung einer Recheneinheit ladbar ist, wobei mit dem zweiten Computerprogramm die Schritte eines Verfahrens nach einem der Ansprüche 1 bis 14 ausgeführt werden, wenn das zweite Computerprogramm auf der Recheneinheit ausgeführt wird.

FIG 1

FIG 2

EP 4 086 772 A1

Europäisches
Patentamt

European
Patent Office

Office européen
des brevets

# EUROPÄISCHER RECHERCHENBERICHT

**Nummer der Anmeldung**

**EP 21 17 2555**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2018/285186 A1 (GODEFROID PATRICE [US] ET AL) 4. Oktober 2018 (2018-10-04) * Absätze [0002] – [0009] * * Absätze [0071] – [0011] * * Abbildungen 3-15 * ----- | 1-15 | INV. G06F11/36 G06F11/34 G06F11/00 |
| A | EP 3 789 920 A1 (FIVE AI LTD [GB]) 10. März 2021 (2021-03-10) * Absätze [0002] – [0031] * * Absätze [0117] – [0241] * * Abbildungen 1-34 * ----- | 1-15 | |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| **München** | **19. Januar 2022** | **Noll, Joachim** |

## ANHANG ZUM EUROPÄISCHEN RECHERCHENBERICHT
## ÜBER DIE EUROPÄISCHE PATENTANMELDUNG NR.

EP 21 17 2555

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-01-2022

| Im Recherchenbericht angeführtes Patentdokument | Datum der Veröffentlichung | Mitglied(er) der Patentfamilie | Datum der Veröffentlichung |
|---|---|---|---|
| US 2018285186 A1 | 04-10-2018 | KEINE | |
| EP 3789920 A1 | 10-03-2021 | EP 3789920 A1 | 10-03-2021 |
| | | WO 2021037760 A1 | 04-03-2021 |
| | | WO 2021037761 A1 | 04-03-2021 |
| | | WO 2021037763 A1 | 04-03-2021 |
| | | WO 2021037765 A1 | 04-03-2021 |
| | | WO 2021037766 A1 | 04-03-2021 |

EPO FORM P0461

Für nähere Einzelheiten zu diesem Anhang : siehe Amtsblatt des Europäischen Patentamts, Nr.12/82